# EUROPÄISCHE PATENTSCHRIFT

(11) **EP 1 852 205 B1**
(45) Veröffentlichungstag und Bekanntmachung des Hinweises auf die Patenterteilung: **15.07.2009**
(21) Anmeldenummer: 07007026.3
(22) Anmeldetag: 04.04.2007
(51) Int. Cl.: B23K 7/00, B23K 7/10, B23K 37/00, B23K 37/02, B22D 11/126, B23K 101/16

(54) **Strangbrennschneidmaschine**
Flame cutting apparatus for slabs
Dispositif pour l'oxycoupage de brames

(30) Priorität: 03.05.2006 DE 102006020415
(43) Veröffentlichungstag der Anmeldung: 07.11.2007
(73) Patentinhaber: Fa. AUTE AG Gesellschaft für autogene Technik, 2068 Hauterive / NE (CH)
(72) Erfinder: Lotz, Horst Karl, 2068 Hauterive (CH)
(74) Vertreter: Aue, Hans-Peter

(56) Entgegenhaltungen:
- EP-A- 0 639 416
- EP-A- 1 034 862
- DE-A1- 3 607 027
- DE-A1- 4 436 566
- DE-C- 906 533
- US-A- 4 603 729

## Beschreibung

Die Erfindung bezieht sich auf eine Strangbrennschneidmaschine zum Aufsetzen auf oder zum elektromotorischen Synchronisieren mit und zum Brennschneiden von gegossenen Strängen, Blöcken und Brammen in und nach Stranggießanlagen nach dem Obergriff der Ansprüche 1 und 2.

Endlos vergossene Stränge aus Stahl in Stranggießanlagen müssen zur Weiterverarbeitung in transportable und den Endprodukten entsprechende Längen unterteilt werden. Diese überwiegend heißen Blöcke oder Brammen werden üblicherweise durch Sauerstoffschneidbrenner an einer Strangbrennschneidmaschine abgetrennt. Bei einer solchen Strangbrennschneidmaschine verwandelt ein Schneidsauerstoffstrahl den auf Zündtemperatur gebrachten Stahl in eine abfließende Oxydschlacke und erzeugt so eine Fuge, die bei Bewegung in einen Schnitt auswächst.

Bei allen bekannten Ausführungen von Strangbrennschneidmaschinen handelt es sich um robuste, überwiegend portalartige, mit Wasserplatten gegen die enorme vom Strang abgestrahlte Hitze geschützte, auf zu beiden Seiten des Stranges angeordneten Schienen verfahrende Maschinengehäuse aus zusammengeschweißten schweren Profilen und Stahlplatten. Eine ebenso erzeugte Brennerwagenlaufbahn an diesem Portal trägt die im Wesentlichen ungeschützten Brennerwagen mit den Schneidbrennern und die versorgenden Schläuche und Kabel, die in Schlauch- und Kabelschleppketten geführt werden.

Bei notwendigen Reparatur- und Wartungsarbeiten an der Strangbrennschneidanlage kann es zum Stillstand der Anlage kommen, was mit enormen Kosten- und Zeitaufwand verbunden ist. Beim Reparatur- und Wartungspersonal kann es wegen der unmittelbaren Arbeitsnähe am heißen Strang und der damit verbundenen Hitzeabstrahlung zu mehr oder weniger starken Verletzungen führen.

Aus der DE 36 07 027 A1 ist eine Vorrichtung zum Wärmeschneiden von vorzugsweise Metallschrott und -abfall bekannt, die im Wesentlichen aus einer am Werkstück entlang verfahrbaren Säule mit Fahrantrieb, Gegengewicht, Hubantrieb, gegebenenfalls Elektrostation und Gasstation, Höhenwagen und einem mit einer Achse zum Ausschwenken eines mit einem Schwenkantrieb drehbar gelagerten rahmenartigen Auslegers besteht, auf dem ein Brennerwagen mit Schneidbrenner quer zum Werkstück verfahrbar ist.

Weiterhin ist aus der DE 906 533 C eine Brennscheidmaschine zum Schneiden von Walzblechen bezieht. Dabei besteht der rahmenartige Ausleger zwecks Kühlung aus wasserdurchflossenen Rohren.

Es ist Aufgabe der Erfindung, eine Strangbrennschneidmaschine der eingangs genannten Art zu schaffen, die insbesondere robust und wartungsgünstig und mit Kühlmöglichkeit ausgebildet ist, um eine Überhitzung der Strangbrennschneidmaschine zu vermeiden.

Erfindungsgemäß wird die Aufgabe durch die Merkmale der Ansprüche 1 und 2 gelöst, wobei der eine oder die zwei Brennerwagen wassergekühlt sind, wobei sie in rundum wasserdurchflossene, aus Rohren gewickelte Kühlmäntel eingeschoben sind.

Weitere Ausgestaltungen ergeben sich aus den Unteransprüchen.

Demgemäß kann vorgesehen sein, dass die Betriebsmittel- und Kühlwasserzufuhr sowie Versorgungs- und Steuerkabel innerhalb größerer, als Sammelleitungen dienenden Kühlwasserschläuchen erfolgt, in denen die Schläuche und Kabel zusammen mit zufließendem und abfließendem Wasser für die Schneidbrenner und zur Kühlung des Brennerwagens verlaufen. Dabei können die Sammelleitungen mit dem Brennerwagen durch Stopfbüchsen oder Flansche an den Schlauchenden verbunden sein.

Des Weiteren sind ein oder mehrere solcher Sammelleitungen pro Brennerwagen über zumindest eine Führungswalze im oberen Rahmenbereich des Auslegers zu einem Festpunkt am Turmwagen oder am Maschinenturm und von da zu einer Gasstation oder Elektrostation geführt. Dabei dient die Führungswalze als Unterstützung beispielsweise im Bereich der oberen Rahmenmitte des Auslegers. Die Sammelleitungen erlauben damit eine Höhenverstellung des Auslegers.

Weiterhin ist zum Schutz der Sammelleitungen vorgesehen, dass diese von hochflexiblen, unbrennbaren Schutzrohren aus metallischen oder keramischen Werkstoffen bzw. Bauteilen umhüllt sind, wobei konische Hülsen oder Rohrteile auf der Sammelleitung aufgereiht und derart gelenkig verbunden sind, dass die kleinen Durchmesser der Hülsen immer aufwärts und die großen Durchmesser immer abwärts gerichtet sind.

Nach einer weiteren vorteilhaften Ausgestaltung der erfindungsgemäßen Strangbrennschneidmaschine sind untere waagerechte Hohlprofile über Aufsetzkufen des rahmenartigen Auslegers als Auflage für die Laufbahn für die Brennerwagen und die dem Werkstück zugewandten, senkrechten Hohlprofile des Turmwagens oder des Maschinenturms als Höhenlaufbahn für den Ausleger vorgesehen.

Ferner können die Laufbahnen auf den unteren Hohlprofilen des Auslegers bei hoher Lauf- und Wärmebelastung durch zusätzliche, seitliche wasserdurchflossene Schutzrohre wärmegeschützt und bei Bedarf mit einer Verzahnung versehen sein. Hierbei können die Schutzrohre auch selbst als Laufbahn für den Brennerwagen dienen.

Um ein Heben und Senken des Auslegers zu ermöglichen, ist am Turmwagen oder am Maschinenturm ein Hubantrieb mit Seil, Kette oder Zahnstange angeordnet.

Des Weiteren ist vorgesehen, dass die freien Enden des Hohlrohrrahmens des Auslegers mit Radlagern versehen sind. Hierfür können die Radlager insbesondere an den senkrechten Hohlrohren des Auslegers eingesteckt oder angeschweißt sein, wobei die Radlager durch Bearbeitung zur genauen Aufnahme von mit Exzentern einstellbaren Laufrädern bestimmt sind. Ferner können die Radlager zur Verstellbarkeit auch anklemmbar an die senkrechten oder die waagrechten Rohre des Auslegers angebracht sein.

Gemäß einer weiteren Ausgestaltung der Erfindung sind die Enden der als Hohlprofile durch Anlegen an andere Hohlprofile oder durch Radlager zur Radaufnahme verschlossen, für den Wasserfluss im Rohrbereich aufgebohrt und mit gekrümmten Rohren zur Verbindung der wassergekühlten Rahmenteile versehen.

Weiterhin ist vorgesehen, dass die senkrechten, nach unten oder nach oben verlängerbaren Hohlrohre eines Turmwagens oder eines Maschinenturmes, die als Laufbahnen für einen Höhenwagen dienen, das Arbeiten auf zwei Ebenen erlauben, wobei ein Höhenwagen auf dem Turmwagen oder auf dem Maschinenturm und ein anderer Höhenwagen auf einer Ebene, auf der sich das Schneidgut bzw. der Rollgang mit dem Strang befindet, verfahrbar sind.

Schließlich bestehen die lösbaren Verbindungen der Strangbrennschneidmaschine aus Logel, Lozen und Bott, bzw. hohlen konischen und federnden, dübelartigen Verbindungsteilen.

Gegenüber den bekannten Strangbrennschneidmaschinen sieht die erfindungsgemäße Strangbrennschneidmaschine eine offene Rohrkonstruktion in der Form eines Auslegers vor. Sie stellt eine robuste, wartungsgünstige und wassergekühlte Maschine mit einem ausschwenkbaren Ausleger dar.

Die besonderen Vorteile der beschriebenen, aus Rohren als Auslegermaschine gebildeten Strangbrennschneidmaschine zum Trennen von Brammen, Blöcken und Knüppeln, im Vergleich zu den bisher üblichen Strangbrennschneidmaschinen, fast als Werkzeugmaschinen entwickelten Maschinen, ergeben sich aus einer neuen Entwicklungsrichtung hin zu Rahmenkonstruktionen ähnlich dem Baukranbau mit einer besseren Materialausnutzung und viel weniger spanabhebender Bearbeitung, dafür erforderlichen Arbeitsgängen und viel weniger der Strahlungswärme der Stränge ausgesetzter Flächen und Materialmassen.

Die Auslegerbauweise erlaubt die Anordnung der Brennschneidmaschine auf nur einer Seite des Stranges mit geringerem Platzbedarf als dem einer üblichen Portalmaschine, wobei zudem eine Seite für andere Zwecke frei bleibt. In der Regel führt das zu einer Verkürzung der gesamten Stranggießanlage.

Die Ausführung als wasserdurchflossene Rohrkonstruktion der Strangbrennschneidmaschine verhindert eine unnötige Erhitzung oder gar Überhitzung tragender Bauteile und verringert einen noch notwendigen Hitzeschutz für die Brennerwagen und die Medien- und Energie-Sammelleitungen und damit die Gesamtmenge des benötigten Kühlwassers.

Die Ausführung als ausschwenkbarer Ausleger ermöglicht eine schnelle und sichere Wartung, entsprechende Reparaturen und den Austausch aller an und auf dem Ausleger befindlichen Teile wie Düsen, Brenner, Schläuche, Brennerwagen, Brennerwagenteile und Sammelleitungen.

Dieses ist natürlich zur Sicherheit von Bedienungs- und Wartungspersonal von allergrößter Bedeutung und bildet das Wesen der Erfindung. Mit dieser Maschinenausführung sind unzählige Diskussionen um frühere kostenträchtige Lösungen, wie zum Beispiel zusätzliche ortsfeste oder mitfahrende Wartungsbühnen, erfolgreich beendet. Ebenso sind auch häufige und zum Teil kritische Verletzungen für das die Strangbrennschneidmaschine bedienende sowie das Reparatur- und Wartungspersonal vermeidbar.

Der der Erfindung zu Grunde liegende Gedanke wird in der nachfolgenden Beschreibung anhand von Ausführungsbeispielen, das in der Zeichnung dargestellt ist, näher beschrieben. Es zeigen:
- Fig. 1A: eine vereinfachte Darstellung einer erfindungsgemäßen Strangbrennschneidmaschine in einer Ansicht von vorn gegen den ankommenden Strang mit einer Ausführung mit Drehkranz zum Ausschwenken eines Auslegers,
- Fig. 1B: eine Draufsicht der Strangbrennschneidmaschine gemäß Fig. 1A,
- Fig. 1C: eine Vorderansicht der Strangbrennschneidmaschine gemäß den Fig. 1A und 1B im ausgeschwenkten Zustand des Auslegers,
- Fig. 2A: eine Ansicht der Strangbrennschneidmaschine von vorn gegen den ankommenden Strang in einer Ausführung mit Scharnieren zum Ausschwenken eines Auslegers,
- Fig. 2B: eine Draufsicht der Strangbrennschneidmaschine gemäß Fig. 2A,
- Fig. 2C: eine Vorderansicht der Strangbrennschneidmaschine gemäß den Fig. 2A und 2B im ausgeschwenkten Zustand des Auslegers,
- Fig. 3: eine zusammenfassende schematische Übersicht der beiden in den Fig. 1A, 1B, 1C, 2A, 2B und 2C dargestellten Strangbrennschneidmaschinen,
- Fig. 4: einen Brennerwagen in einer Vorderansicht (Fig. 4A), einer Seitenansicht (Fig. 4B) und einer Draufsicht (Fig. 4C),
- Fig. 5: eine Seitenansicht einer Sammelleitung zur flexiblen Führung von Medien- und Energieleitungen, und
- Fig. 6: eine Vorderansicht (Fig. 6A) und eine Seitenansicht (Fig. 6B) eines Kühlgehäuses zum Kühlen eines Brennerwagens.

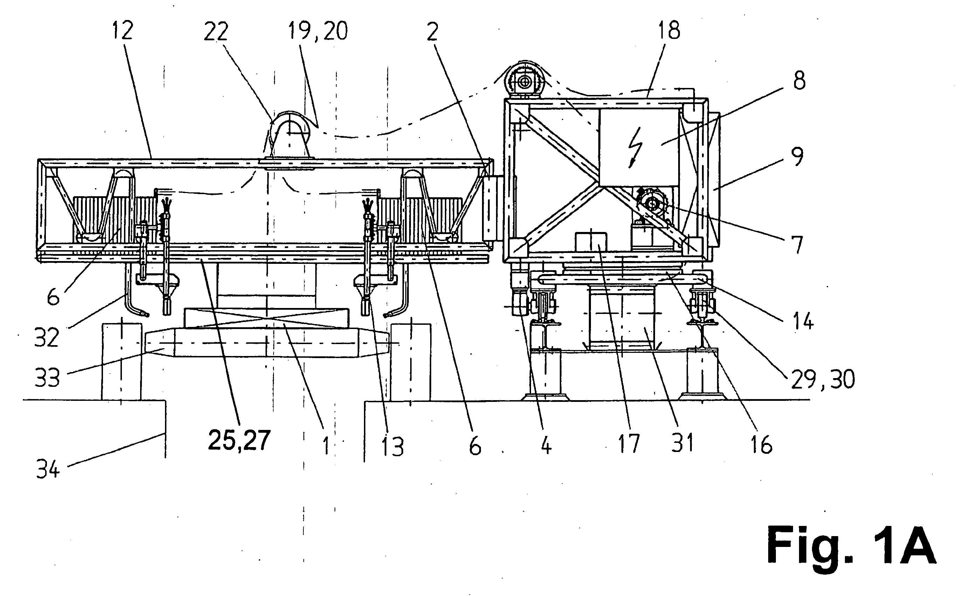

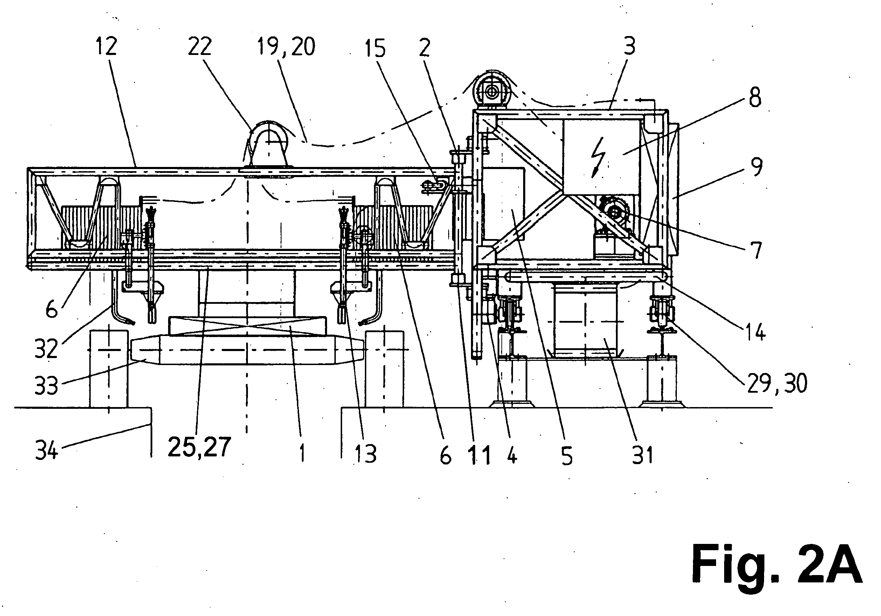

Wie in den Fig. 1A bis 1C und 2A bis 2C dargestellt, laufen die den oder die Brenner 13 quer in Schneidrichtung verfahrbaren, sich auf Laufbahnen 26 bewegenden Brennerwagen 6 in einem offenen, aus wassergekühlten Rohren bestehenden rahmenartigen Ausleger 12, der für den Synchronlauf auf dem Werkstück 1 ruht und an einem Turmwagen 3 gemäß den Fig. 2A bis 2C oder an einem Maschinenturm 18 gemäß den Fig. 1A bis C mit Radlagern 29 und Laufrädern 30 eines Höhenwagens 10 verfahrbar ist.

Der Maschinenturm 18 sitzt auf einem Drehkranz 16 auf dem Maschinenwagen 14, der den Aufsetzsynchronrücklauf und einen motorischen Rücklauf oder anderes Verfahren ermöglicht. Statt des Aufsetzens eines Maschinenteils für einen Synchronlauf zwischen Brennschneidmaschine 2 und Werkstück 1 lässt sich ein solcher auch elektromotorisch oder als Kombination zwischen beiden Systemen erzeugen.

Mittels des Drehkranzes 16 ist der Maschinenturm 18 drehbar und der Ausleger 12 kann zu Wartungs- oder Reparaturzwecken vom Strang 1 weg ausgeschwenkt werden. Hierzu ist ein Gegengewicht 5 für den Ausleger 12 vorgesehen. Ohne einen Drehkranz 16 kann der Ausleger 12 mit Scharnieren 11 am Höhenwagen 10 angebracht sein. Der Ausleger 12 kann auch beispielsweise mittels einem gelenkig am Höhenwagen 10 oder am Turmwagen 3 angebrachten Schwenkantrieb 15 oder mittels Kolben für Pressluft, Hydraulik oder mit einer Spindel geschwenkt werden.

Auch ohne Höhenverstellung ist ein Ausschwenken des Auslegers 12 sinnvoll, nämlich dann, wenn eine Anpassung der Strangbrennschneidmaschine 2 an die Werkstückdicke oder einen geeigneten Düsenabstand durch Verstellung der Schneidbrenner 13 erfolgt.

Unter dem Maschinenwagen 14 verläuft eine Kabelschleppkette 31 für alle Versorgungsmedien. Auf dem Maschinenwagen 14 oder am Maschinenturm 18 befinden sich eine Steuer- und eine Medientafel einer Elektrostation 8 und einer Gasstation 9, von denen wassergekühlte, flexible Sammelleitungen 19 über Führungswalzen 22 am oberen Maschinenturm 18 und am Ausleger 12 zu den Brennerwagen 6 mit den Schneidbrennern 13 führen. Die Sammelleitungen 19 hängen über eine Führungswalze 22 als Unterstützung im Bereich der oberen Rahmenmitte des Auslegers 12 und führen von da waagerecht oder leicht geneigt zu einem Festpunkt am Turmwagen 3 oder am Maschinenturm 18 und von da zur Gasstation 9 oder Elektrostation 8 auf der hinteren Außenseite des Turmwagens 3 oder des Maschinenwagens 14. Einzelschläuche von der Seite des Maschinenwagens 14 nach oben zur Gasstation 9 auf der hinteren Außenseite des Maschinenturmes 18 oder des Turmwagens 3 um die Ecke herum ermöglichen eine 90° Drehung des Auslegers 12.

Weiterhin ist die Strangbrennschneidmaschine 2 mit einem Hubantrieb 7, einem Fahrantrieb 4 und einem Drehantrieb 17 ausgestattet. Mit dem Drehantrieb 17 kann der Ausleger 12 zu einer zugänglichen Wartungsseite hin für Wartung oder Reparatur, zum Beispiel Düsenwechsel, Brennerwechsel oder Austausch einer Sammelleitung 19, ausgeschwenkt werden. Damit bleibt die andere Seite neben dem den Strang transportierenden Rollgang 33 frei und erlaubt die seitliche Anordnung der Kaltstrangaufnahme, die eine entsprechende Verkürzung der Gesamtanlage ermöglicht.

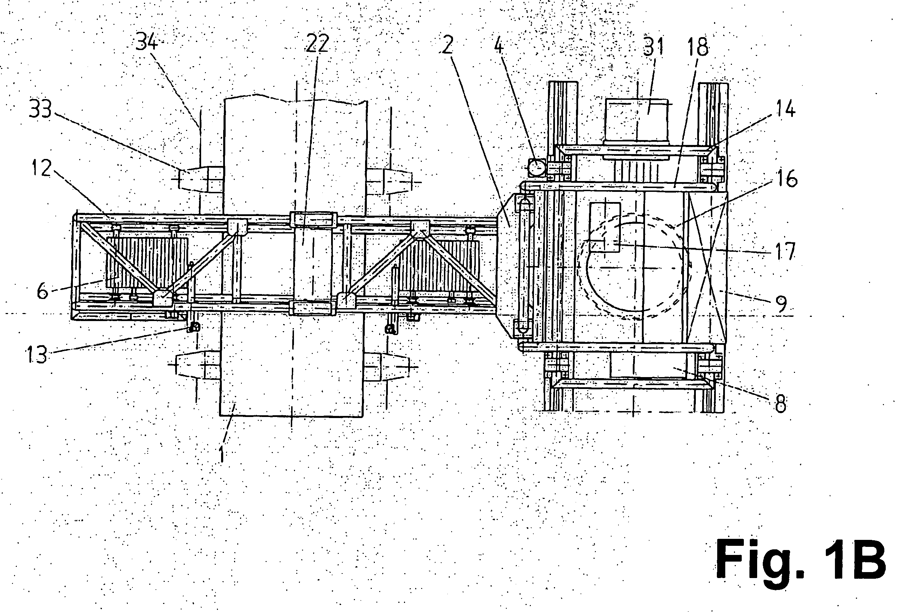

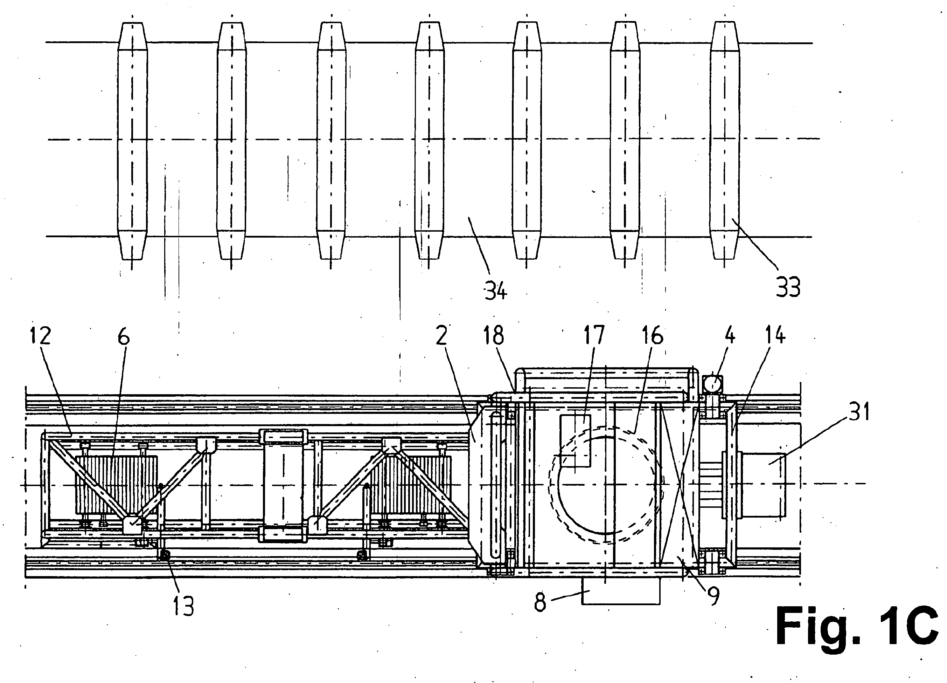

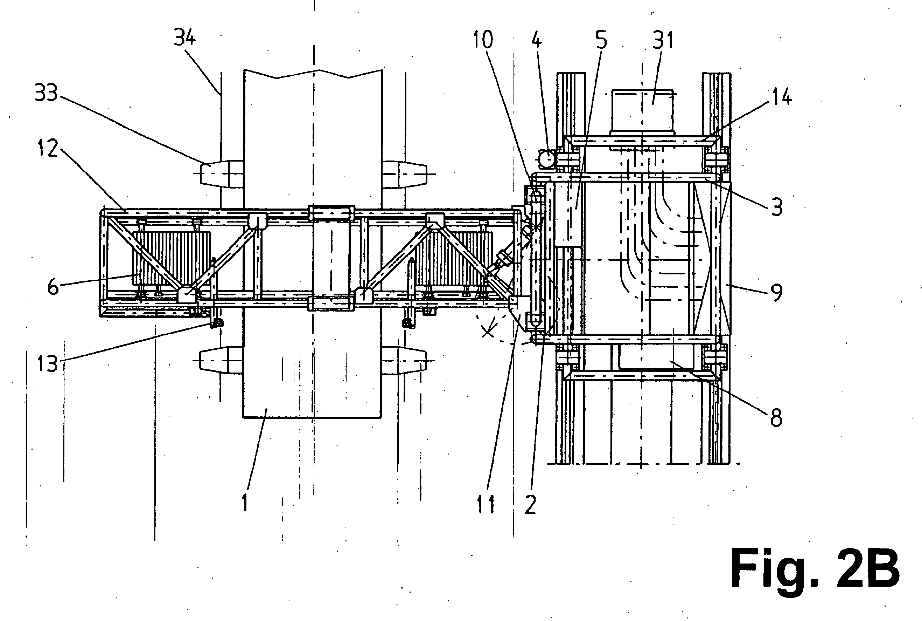

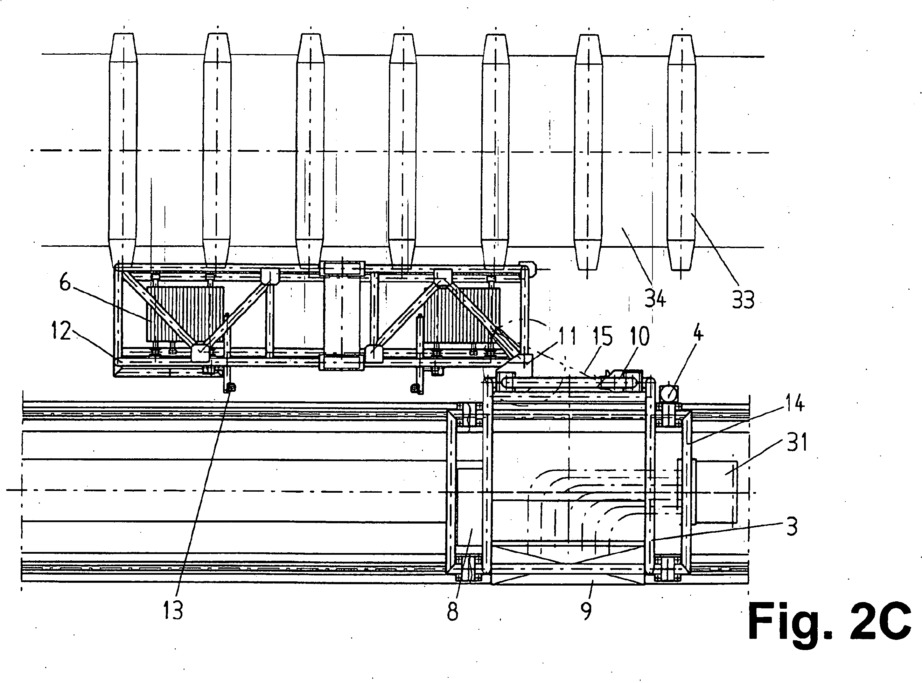

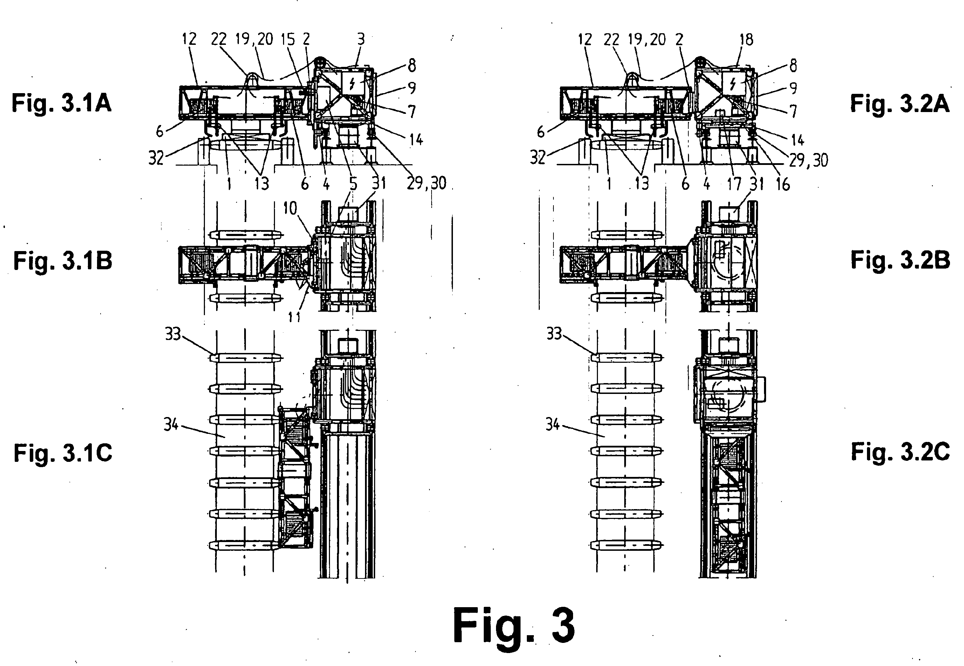

Eine zusammenfassende schematische Übersicht der beiden in den Fig. 1A, 1B, 1C, 2A, 2B, 2C dargestellten Strangbrennschneidmaschinen wird in Fig. 3 gezeigt.

Weiterhin sind in Fig. 1A Granulierdüsen 32, aus denen der Ausleger 12 zum Granulieren der Schneidschlacke versorgt wird, und Aufsetzkufen 25 an einem unteren Rohr des Auslegers 12 vorgesehen. Der Strang 1 läuft oder liegt auf dem Rollgang 33 über einem Sinterkanal 34.

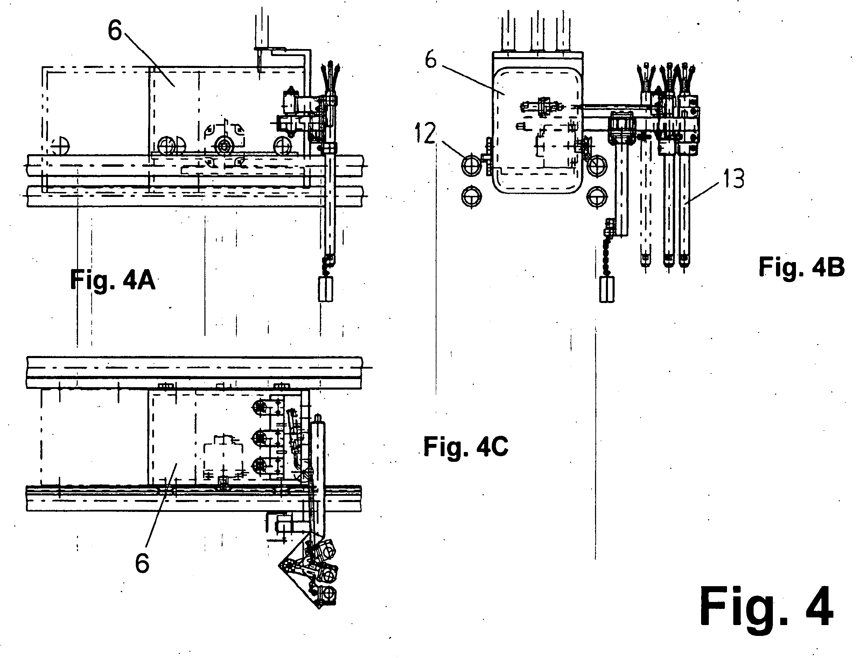

In Fig. 4 zeigt einen Brennerwagen 6 in einer Vorderansicht (Fig. 4A), einer Seitenansicht (Fig. 4B) und einer Draufsicht (Fig. 4C), mit Schwenkantrieb 15, Schneidbrenner 13, Probeschneidbrenner 13 und Sauerstoff-Abschaltventilen als Einschub nach Art einer Schublade in ein Rundum-Kühlgehäuse, eingeschoben mit nachfolgend eingefügten Achsen und Laufrädern 30.

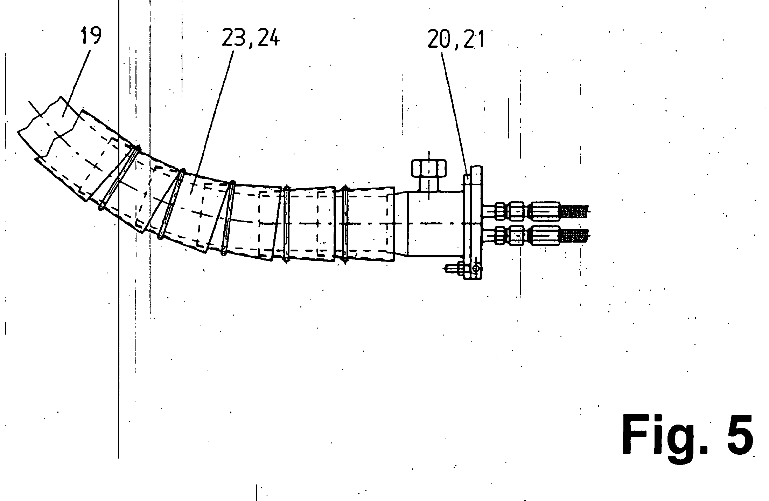

Die in Fig. 5 dargestellte Sammelleitung 19 besteht im Wesentlichen aus einem aus mehreren ineinander steckbaren Hülsen 24 gebildeten flexiblen Schutzrohr 23 mit einer Stopfbüchse 20 bzw. einem Flansch 21.

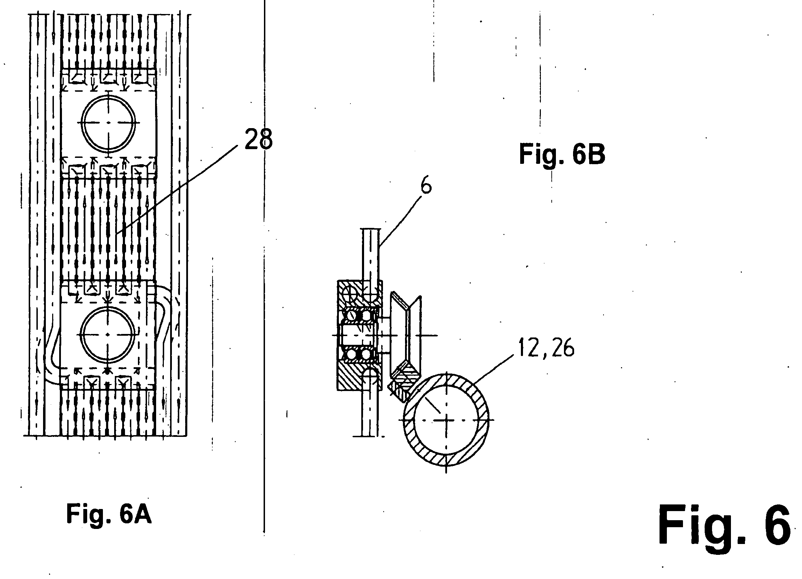

Fig. 6 zeigt eine Vorderansicht (Fig. 6A) und eine Seitenansicht (Fig. 6B) eines Kühlgehäuses zum Kühlen eines Brennerwagens, wobei die Kühlung durch *w*asserdurchflossene Kühlmäntel 28 erfolgt.

### Liste der Bezugszeichen

- 1: Strang, Werkstück, Block, Bramme
- 2: Strangbrennschneidmaschine
- 3: Turmwagen
- 4: Fahrantrieb
- 5: Gegengewicht
- 6: Brennerwagen
- 7: Hubantrieb
- 8: Elektrostation
- 9: Gasstation
- 10: Höhenwagen
- 11: Scharnier
- 12: Ausleger
- 13: Schneidbrenner
- 14: Maschinenwagen
- 15: Schwenkantrieb
- 16: Drehkranz
- 17: Drehantrieb
- 18: Maschinenturm
- 19: Sammelleitungen
- 20: Stopfbüchse
- 21: Flansch
- 22: Führungswalze
- 23: Schutzrohr
- 24: Hülse
- 25: Aufsetzkufe
- 26: Laufbahn für Brennerwagen
- 27: Höhenlaufbahn
- 28: *wasserdurchflossene Kühlmäntel*
- 29: Radlager
- 30: Laufrad
- 31: Kabelschleppkette
- 32: Granulierdüse
- 33: Rollengang
- 34: Sinterkanal

## Patentansprüche

1. Strangbrennschneidmaschine zum Aufsetzen auf oder zum elektromotorischen Synchronisieren mit und zum Brennschneiden von gegossenen Strängen, Blöcken und Brammen (1) in und nach Stranggießanlagen, im Wesentlichen bestehend aus einem am Werkstück (1) entlang verfahrbaren Turmwagen (3) mit Fahrantrieb (4), Gegengewicht (5), Hubantrieb (7), Elektrostation (8), Gasstation (9), Höhenwagen (10), einem mit Scharnieren (11) zum Ausschwenken eines mit einem Schwenkantrieb (15) drehbar gelagerten, von Kühlwasser durchflossenen, rahmenartigen Auslegers (12), und einem oder zwei, auf dem Ausleger (12) verfahrbaren Brennerwagen (6) mit Schneidbrenner (13), **dadurch gekennzeichnet, dass** der eine oder die zwei Brennerwa gen (6) wassergekühlt sind, wobei sie in rundum wasserdurchflossene, aus Rohren gewickelte Kühlmäntel (28) eingeschoben sind.

2. Strangbrennschneidmaschine zum Aufsetzen auf oder zum elektromotorischen Synchronisieren mit und zum Brennschneiden von gegossenen Strängen, Blöcken und Brammen (1) in und nach Stranggießanlagen, bestehend aus einem Maschinenwagen (14) mit Fahrantrieb (4), Gegengewicht (5), Drehkranz (16) zum Ausschwenken eines Auslegers (12), Drehantrieb (17), Maschinenturm (18), Hubantrieb (7), Elektrostation (8), Gasstation (9), Höhenwagen (10), einem an letzterem angebrachten, von Kühlwasser durchflossenen rahmenartigen Ausleger (12) und einem oder zwei, auf dem Ausleger (12) verfahrbaren Brennerwagen (6) mit Schneidbrenner (13), **dadurch gekennzeichnet, dass** der eine oder die zwei Brennerwagen (6) wassergekühlt sind, wobei sie in rundum wasserdurchflossene, aus Rohren gewickelte Kühlmäntel (28) eingeschoben sind.

3. Strangbrennschneidmaschine nach Anspruch 1 oder 2, **dadurch gekennzeichnet, dass** die Betriebsmittel- und Kühlwasserzufuhr sowie Versorgungs- und Steuerkabel innerhalb größerer, als Sammelleitungen (19) dienenden Kühlwasserschläuchen erfolgt, in denen die Schläuche und Kabel zusammen mit zufließendem und abfließendem Wasser für die Schneidbrenner (13) und zur Kühlung des Brennerwagens (6) verlaufen.

4. Strangbrennschneidmaschine nach Anspruch 3, **dadurch gekennzeichnet, dass** die Sammelleitungen (19) mit dem Brennerwagen (6) durch Stopfbüchsen (20) oder Flansche (21) an den Schlauchenden verbunden sind.

5. Strangbrennschneidmaschine nach Anspruch 3, **dadurch gekennzeichnet, dass** ein oder mehrere solcher Sammelleitungen (19) pro Brennerwagen (6) über zumindest eine Führungswalze (22) im oberen Rahmenbereich des Auslegers (12) zu einem Festpunkt am Turmwagen (3) oder am Maschinenturm (18) und von da zu einer Gasstation (9) oder Elektrostation (8) geführt sind.

6. Strangbrennschneidmaschine nach einem der Ansprüche 3 bis 5, **dadurch gekennzeichnet, dass** die Sammelleitungen (19) von hochflexiblen, unbrennbaren Schutzrohren (23) aus metallischen oder keramischen Werkstoffen bzw. Bauteilen umhüllt sind, wobei konische Hülsen (24) oder Rohrteile auf der Sammelleitung (19) aufgereiht und derart gelenkig verbunden sind, dass die kleinen Durchmesser der Hülsen (24) immer aufwärts und die großen Durchmesser immer abwärts gerichtet sind.

7. Strangbrennschneidmaschine nach einem der Ansprüche 1 bis 6, **dadurch gekennzeichnet, dass** untere waagerechte Hohlprofile über Aufsetzkufen (25) des rahmenartigen Auslegers (12) als Auflage für die Laufbahn (26) für die Brennerwagen (6) und die dem Werkstück (1) zugewandten, senkrechten Hohlprofile des Turmwagens (3) oder des Maschinenturms (18) als Höhenlaufbahn (27) für den Ausleger (12) vorgesehen sind.

8. Strangbrennschneidmaschine nach Anspruch 7, **dadurch gekennzeichnet, dass** die Laufbahnen (26) auf den unteren Hohlprofilen des Auslegers (12) bei hoher Lauf- und Wärmebelastung durch zusätzliche, seitliche wasserdurchflossene Schutzrohre (28) wärmegeschützt und bei Bedarf mit einer Verzahnung versehen sind.

9. Strangbrennschneidmaschine nach einem der Ansprüche 1 bis 8, **dadurch gekennzeichnet, dass** am Turmwagen (3) oder am Maschinenturm (18) ein Hubantrieb (7) mit Seil, Kette oder Zahnstange zum Heben und Senken des Auslegers (12) angeordnet ist.

10. Strangbrennschneidmaschine nach einem der Ansprüche 1 bis 9, **dadurch gekennzeichnet, dass** die freien Enden des Hohlrohrrahmens des Auslegers (12) mit Radlagern (29) versehen sind.

11. Strangbrennschneidmaschine nach einem der Ansprüche 1 bis 10, **dadurch gekennzeichnet, dass** die Enden der als Hohlprofile durch Anlegen an andere Hohlprofile oder durch Radlager (29) zur Radaufnahme verschlossen, für den Wasserfluss im Rohrbereich aufgebohrt und mit gekrümmten Rohren zur Verbindung der wassergekühlten Rahmenteile versehen sind.

12. Strangbrennschneidmaschine nach einem der Ansprüche 1 bis 11, **dadurch gekennzeichnet, dass** die senkrechten, nach unten oder nach oben verlängerbaren Hohlrohre eines Turmwagens (3) oder eines Maschinenturmes (18), die als Laufbahnen für einen Höhenwagen (10) dienen, das Arbeiten auf zwei Ebenen erlauben, wobei ein Höhenwagen (10) auf dem Turmwagen (3) oder auf dem Maschinenturm (18) und ein anderer Höhenwagen (10) auf einer Ebene, auf der sich das Schneidgut bzw. der Rollgang (32) mit dem Strang (1) befindet, verfahrbar sind.

13. Strangbrennschneidmaschine nach einem der Ansprüche 1 bis 12, **dadurch gekennzeichnet, dass** die lösbaren Verbindungen der Strangbrennschneidmaschine (2) aus Logel, Lozen und Bott, bzw. hohlen konischen und federnden, dübelartigen Verbindungsteilen bestehen.

## Claims

1. An oxygen strand cutting machine for putting onto or for electromotively synchronizing with and for flame cutting of cast strands, blooms and slabs (1) in and downstream of continuous casting plants, substantially comprising an aerial platform (3) with travel drive (4) movable alongside the workpiece (1), counterweight (5), lift drive (7), electric station (8), gas station (9), height carriage (10), a frame-type cantilever (12) with hinges (11) for swivelling out and pivoted with swivel drive (15) through which cooling water flows, and one or two torch carriages (6) movable on the cantilever (12) with cutting torch (13), **characterized in that** the one or two torch carriages (6) are water-cooled and being inserted into cooling jackets (28) wound from tubes and passed through by water all around.

2. An oxygen strand cutting machine for putting onto or for electromotively synchronizing with and for flame cutting of cast strands, blooms and slabs (1) in and downstream of continuous casting plants, substantially comprising an engine car (14) with travel drive (4), counterweight (5), live ring (16) for pivoting out a cantilever (12), rotary drive (17), engine tower (18), lift drive (7), electric station (8), gas station (9), height carriage (10), a frame-type cantilever (12), attached to the latter, through which cooling water flows, and one or two torch carriages (6) movable on the cantilever (12) with cutting torch (13), **characterized in that** the one or two torch carriages (6) are water-cooled and being inserted into cooling jackets (28) wound from tubes and passed through by water all around.

3. An oxygen strand cutting machine according to claim 1 or 2, **characterized in that** the resources and cooling water supply and supply and control cables occurs within larger cooling water tubes serving as manifolds (19), in which the tubes and cables run together with inflowing and draining water for the cutting torches (13) and for cooling of the torch carriage (6).

4. An oxygen strand cutting machine according to claim 3, **characterized in that** the manifolds (19) are connected to the torch carriage (6) by packing boxes (20) or flanges (21) at the tube ends.

5. An oxygen strand cutting machine according to claim 3, **characterized in that** one or several of such manifolds (19) per torch carriage (6) are lead via at least one guide roller (22) in the upper frame zone of the cantilever (12) to a fixed point on the aerial platform (3) or on the engine tower (18) and from there to a gas station (9) or an electric station (8).

6. An oxygen strand cutting machine according to one of the claims 3 to 5, **characterized in that** the manifolds (19) are enveloped by highly flexible, incombustible protective conduits (23) out of metallic or ceramic materials and/or components with tapered bushings (24) or tube parts being strung on the manifold (19) and being connected pin-jointed in such a way that the small diameters of the bushings (24) are always directed towards the top and the large diameters are always directed towards the bottom.

7. An oxygen strand cutting machine according to one of the claims 1 to 6, **characterized in that** lower horizontal hollow sections via put-on skids (25) of the frame-type cantilever (12) are provided as a support for the track (26) of the torch carriage (6), and the vertical hollow sections of the aerial platform (3), facing towards the workpiece (1), or of the engine tower (18) are provided as a height track (27) for the cantilever (12).

8. An oxygen strand cutting machine according to claim 7, **characterized in that** the tracks (26) on the lower hollow sections of the cantilever (12) in the event of high running and heat load are heat insulated by additional, lateral protective conduits (28) through which water flows, and if required, are provided with a gearing.

9. An oxygen strand cutting machine according to one of the claims 1 to 8, **characterized in that** on the aerial platform (3) or on the engine tower (18) a lift drive (7) with rope, chain or rack for lifting and lowering of the cantilever (12) is located.

10. An oxygen strand cutting machine according to one of the claims 1 to 9, **characterized in that** the free ends of the hollow pipe frame of the cantilever (12) are provided with wheel bearings (29).

11. An oxygen strand cutting machine according to one of the claims 1 to 10, **characterized in that** the ends of the hollow sections closed by attaching them to other hollow sections or by wheel bearings (29) for wheel mount are drilled open for water flow in the tube area and are provided with curved tubes for connection of the water-cooled frame portions.

12. An oxygen strand cutting machine according to one of the claims 1 to 11, **characterized in that** the vertical hollow pipes of an aerial platform (3) or an engine tower (18) extendable towards the bottom or towards the top serving as tracks for a height carriage (10), permit operation on two levels with one height carriage (10) being movable on the aerial platform (3) or on the engine tower (18) and another height carriage (10) being movable on a level where the cutting material and/or the roller table (32) is located with the strand (1).

13. An oxygen strand cutting machine according to one of the claims 1 to 12, **characterized in that** the releasable connections of the oxygen strand cutting machine (2) are comprised of Logel, Lozen and Bott and/or hollow tapered and resilient, dowel-like connecting elements.

## Revendications

1. Machine d'oxycoupage de barres destinée à être posée sur ou pour la synchronisation électromotrice avec et pour l'oxycoupage de barres, lingots et brames coulés (1) à l'intérieur et à la suite d'installations de coulée continue, se composant pour l'essentiel d'un chariot-tour (3) apte à être déplacé le long de la pièce (1) et comprenant un entraînement de roulement (4), un contrepoids (5), un entraînement de levage (7), une station électrique (8), une station à gaz (9), un chariot déplaçable en hauteur (10), d'une flèche (12) de type cadre parcourue par de l'eau de refroidissement qui est apte à pivoter grâce à des charnières (11) et qui est logée à rotation par l'intermédiaire d'un entraînement en pivotement (15), ainsi que d'un ou de deux chariots porte-chalumeau (6) présentant un chalumeau d'oxycoupage (13) et déplaçables sur ladite flèche (12), **caractérisée par le fait que** l'un ou les deux chariots porte-chalumeau (6) sont refroidis par l'eau, ceux-ci étant introduits dans des chemises de refroidissement (28) parcourues tout autour par de l'eau et formées de tuyaux enroulés.

2. Machine d'oxycoupage de barres destinée à être posée sur ou pour la synchronisation électromotrice avec et pour l'oxycoupage de barres, lingots et brames coulés (1) à l'intérieur et à la suite d'installations de coulée continue, se composant d'un chariot de machines (14) comprenant un entraînement de roulement (4), un contrepoids (5), une couronne pivotante (16) pour faire pivoter une flèche (12), un moteur d'orientation (17), une tour de machines (18), un entraînement de levage (7), une station électrique (8), une station à gaz (9), un chariot déplaçable en hauteur (10), d'une flèche (12) de type cadre qui est montée sur ce dernier et parcourue par de l'eau de refroidissement, ainsi que d'un ou de deux chariots porte-chalumeau (6) présentant un chalumeau d'oxycoupage (13) et déplaçables sur ladite flèche (12), **caractérisée par le fait que** l'un ou les deux chariots porte-chalumeau (6) sont refroidis par l'eau, ceux-ci étant introduits dans des chemises de refroidissement (28) parcourues tout autour par de l'eau et formées de tuyaux enroulés.

3. Machine d'oxycoupage de barres selon la revendication 1 ou 2, **caractérisée par le fait que** l'alimentation en milieux de service et en eau de refroidissement ainsi que les câbles d'alimentation et de commande se fait à l'intérieur de plus grands tuyaux flexibles qui font office de conduites collectrices (19) et dans lesquels les tuyaux flexibles et les câbles s'étendent conjointement avec l'eau qui arrive et sort destinée aux chalumeaux d'oxycoupage (13) et au refroidissement du chariot porte-chalumeau (6).

4. Machine d'oxycoupage de barres selon la revendication 3, **caractérisée par le fait que** lesdites conduites conductrices (19) sont reliées au chariot porte-chalumeau (6) par l'intermédiaire de presse-étoupe (20) ou de brides (21) prévus aux extrémités des tuyaux flexibles.

5. Machine d'oxycoupage de barres selon la revendication 3, **caractérisée par le fait qu'**une ou plusieurs de telles conduites collectrices (19) par chariot porte-chalumeau (6) est ou bien sont menée(s) par au moins un rouleau-guide (22) situé dans la zone supérieure du cadre de la flèche (12), vers un point fixe sur ledit chariot-tour (3) ou sur la tour de machines (18) et de là vers une station à gaz (9) ou une station électrique (8).

6. Machine d'oxycoupage de barres selon l'une quelconque des revendications 3 à 5, **caractérisée par le fait que** lesdites conduites collectrices (19) sont enveloppées de tubes protecteurs (23) hautement flexibles non inflammables en matériaux ou bien composants métalliques ou céramiques, des douilles coniques (24) ou portions de tuyau étant enfilées sur ladite conduite collectrice (19) et étant reliées entre elles de façon articulée de telle manière que les petits diamètres des douilles (24) sont orientés toujours vers le haut et que les grands diamètres sont orientés toujours vers le bas.

7. Machine d'oxycoupage de barres selon l'une quelconque des revendications 1 à 6, **caractérisée par le fait que** des profilés creux inférieurs horizontaux en tant que patins de pose (25) de la flèche de type cadre (12) sont prévus comme appui pour le voie de roulement (26) pour les chariots porte-chalumeau (6) et que les profilés creux verticaux du chariot-tour (3) ou de la tour de machines (18), qui montrent en direction de la pièce (1), sont prévus en tant que voie haute de roulement (27) pour ladite flèche (12).

8. Machine d'oxycoupage de barres selon la revendication 7, **caractérisée par le fait que**, dans le cas d'une charge importante de roulement et thermique, lesdits voies de roulement (26) sur les profilés creux inférieurs de la flèche (12) sont protégées contre la chaleur par des tubes protecteurs (28) latéraux supplémentaires parcourus par de l'eau et sont, en cas de besoin, pourvues d'une denture.

9. Machine d'oxycoupage de barres selon l'une quelconque des revendications 1 à 8, **caractérisée par le fait que** sur ledit chariot-tour (3) ou sur la tour de machines (18) est disposé un entraînement de levage (7) comprenant un câble, une chaîne ou une crémaillère qui est destiné à lever et abaisser ladite flèche (12).

10. Machine d'oxycoupage de barres selon l'une quelconque des revendications 1 à 9, **caractérisée par le fait que** les extrémités libres du cadre à tubes creux de la flèche (12) sont munies de roulements de roue (29).

11. Machine d'oxycoupage de barres selon l'une quelconque des revendications 1 à 10, **caractérisée par le fait que** les extrémités des profilés creux sont fermées en étant appliquées à d'autres profilés creux ou par des roulements de roue (29) destinés à recevoir des roues, sont percées au niveau du tube pour l'écoulement d'eau et sont pourvues de tubes courbés pour le raccordement des parties de cadre refroidies par eau.

12. Machine d'oxycoupage de barres selon l'une quelconque des revendications 1 à 11, **caractérisée par le fait que** les tubes creux verticaux d'un chariot-tour (3) ou d'une tour de machines (18) qui peuvent être rallongés vers le bas ou vers le haut et qui font fonction de voies de roulement pour un chariot déplaçable en hauteur (10) permettent de travailler à deux niveaux, un chariot déplaçable en hauteur (10) étant déplaçable sur le chariot-tour (3) ou sur la tour de machines (18) et un autre chariot déplaçable en hauteur (10) étant déplaçable à un niveau où est situé le produit à couper ou bien le tablier à rouleaux (32) avec la barre (1).

13. Machine d'oxycoupage de barres selon l'une quelconque des revendications 1 à 12, **caractérisée par le fait que** les liaisons amovibles de la machine d'oxycoupage de barres (2) se composent de Logel, Lozen et Bott ou bien de pièces d'assemblage creuses, coniques et faisant ressort de type chevilles.
